# EUROPÄISCHE PATENTSCHRIFT

(11) **EP 0 695 655 B1**
(45) Veröffentlichungstag und Bekanntmachung des Hinweises auf die Patenterteilung: **01.04.1998**
(21) Anmeldenummer: 95111332.3
(22) Anmeldetag: 19.07.1995
(51) Int. Cl.: B60D 1/46, B60D 1/54, A01B 59/042

(54) **Zugvorrichtung und Verriegelungsvorrichtung**
Towing connection and lock device
Système de traction et dispositif de blocage

(30) Priorität: 03.08.1994 DE 4427399; 11.03.1995 DE 19508839
(43) Veröffentlichungstag der Anmeldung: 07.02.1996
(73) Patentinhaber: DEERE & COMPANY, Moline, Illinois 61265 (US)
(72) Erfinder: Zahn, Werner, D-67454 Hassloch (DE); Heilmann, Joachim, D-69245 Bammental (DE)
(74) Vertreter: Feldmann, Bernhard

(56) Entgegenhaltungen:
- EP-A- 0 308 271
- FR-A- 2 367 414
- GB-A- 1 241 083
- GB-A- 1 505 482
- GB-A- 2 208 583

## Beschreibung

Die Erfindung betrifft eine Zugvorrichtung für landwirtschaftliche oder industrielle Fahrzeuge gemäß den Merkmalen des Oberbegriffs des Patentanspruchs 1. Diese Zugvorrichtung enthält ein Rahmenteil, das durch Hubmittel, beispielsweise Hubstreben, in vertikaler Richtung zwischen einer oberen Transportstellung und einer abgesenkten Stellung schwenkbar am Fahrzeugrumpf (beispielsweise am Differentialgehäuse eines Ackerschleppers) angelenkt ist. Das freie, verschwenkbare Ende des Rahmenteils nimmt ein vorstehendes, unmittelbar oder mittelbar vom Rahmenteil geführtes und gegebenenfalls in diesem verschiebbares und in wenigstens einer Fahrzeuglängsposition arretierbares Zugelement, beispielsweise Zughaken oder Zugpendel, auf. Die Zugvorrichtung enthält ferner Arretiermittel, durch die die Zugvorrichtung in ihrer Transportstellung gegenüber dem Fahrzeugrumpf festlegbar ist.

Eine derartige Zugvorrichtung, die dem Koppeln von Gerätezugstangen (Deichsel) eines anzuhängenden Gerätes dient, ist insbesondere für die John Deere Schlepperserien 6000 und 7000 verfügbar. Bei dieser Zugvorrichtung ist ein oberes Rahmenteil starr mit dem Hinterachsdifferentialgehäuse des Schleppers verschraubt. Das obere Rahmenteil trägt eine Achse, auf der ein unteres Rahmenteil in vertikaler Richtung schwenkbar gelagert ist. Das untere Rahmenteil ist in der Art einer Kassette ausgebildet, in die ein schubladenförmiges, als Zwischenelement ausgebildetes Führungsteil einschiebbar ist. Zwischen der Achse und dem Führungsteil ist ein zweiseitig beaufschlagbarer Hydraulikzylinder angeordnet. Durch Betätigung des Hydraulikzylinders läßt sich das Führungsteil innerhalb des unteren Rahmenteils in Fahrzeuglängsrichtung verschieben. An dem Führungsteil ist ein hervorstehender Zughaken durch Bolzen befestigt. An dem oberen Rahmenteil sind seitlich zwei verschwenkbare Haken angelenkt, denen entsprechende, an dem unteren Rahmenteil befestigte Bolzen zugeordnet sind. Wird das untere Rahmenteil gemeinsam mit dem Führungsteil und dem Zughaken nach oben in die Transportstellung geschwenkt, so verrasten die Haken mit den Bolzen. Der Zughaken ist auf diese Weise in der angehobenen Transportstellung festgelegt. Die durch eine Gerätezugstange auf den Zughaken übertragenen Kräfte werden über das Führungsteil und das untere Rahmenteil an das mit dem Schlepperrumpf verbundene obere Rahmenteil weitergeleitet. Dies macht eine entsprechend steife Ausbildung der Bauteile erforderlich. Insbesondere weist das untere Rahmenteil weit nach hinten stehende untere Versteifungsplatten auf, die bei angehobener Zugvorrichtung die Bodenfreiheit des Schleppers und bei abgesenkter Zugvorrichtung die Koppelhöhe begrenzen, da die Versteifungsplatten auf dem Boden aufliegen und verhindern, daß der freistehende Zughaken in den Untergrund eintauchen kann. Ferner ist die arretierbare Verbindung zwischen den verschwenkbaren Haken und den am Rahmenteil fixierten Bolzen kontruktiv noch relativ aufwendig gestaltet.

Die der Erfindung zugrunde liegende Aufgabe wird darin gesehen, eine Zugvorrichtung anzugeben, durch die die eingangs genannten Nachteile vermieden werden und durch die insbesondere eine Verbesserung der Bodenfreiheit und der Koppelhöhe und eine Vereinfachung sowie Verschlankung der Bauteile erreichbar ist. Ferner soll eine vereinfachte und zuverlässig wirkende Ausbildung der Arretiermittel angegeben werden.

Die Aufgabe wird ausgehend von dem Oberbegriff des Patentanspruchs 1 bzw. 3 durch deren kennzeichnende Merkmale gelöst.

Da gemäß Patentanspruch 1 das Zugelement in Transportstellung unmittelbar, bzw. durch ein von dem verschwenkbaren Rahmenteil geführtes Zwischenelement an dem Fahrzeugrumpf oder einem mit dem Fahrzeugrumpf fest verbundenen Bauteil festlegbar ist, werden die von einer Gerätezugstange in das Zugelement eingeleiteten Kräfte unmittelbar über die Haltevorrichtung auf den Fahrzeugrumpf übertragen. Rahmenteile, die das Zugelement tragen, brauchen in Transportstellung keine nennenswerten Anhängekräfte aufzunehmen und können daher entsprechend schlank (geringe Materialstärken) ausgebildet werden. Der Übertragung von Anhängekräften dienende Versteifungen können entfallen. Für eine arretierte Zugvorrichtung kann somit die Bodenfreiheit des Fahrzeuges verbessert werden. Ferner wird eine günstigere Koppelhöhe ermöglicht, da das freistehende Zugelementende beim Eintauchen in den Untergrund nicht durch Verstärkungen behindert wird. Die letztgenannten Vorteile lassen sich insbesondere durch eine unmittelbar an dem Zugelement angebrachte Haltevorrichtung verwirklichen.

Die durch die Erfindung vorgeschlagene Lösung eignet sich insbesondere für eine Zugvorrichtung, bei der das Rahmenteil ein als Führungsteil ausgebildetes Zwischenelement aufnimmt, das gegebenenfalls durch einen Antrieb, beispielsweise einen Hydraulikzylinder in Fahrzeuglängsrichtung verschiebbar ist, wobei an dem Führungsteil das Zugelement befestigt ist.

Vorzugsweise enthält die Haltevorrichtung wenigstens eine an der Oberseite des Zugelements bzw. des Zwischenelements aufgesetzte (beispielsweise angeformte, verschweißte oder verschraubte) Lasche mit einer hinsichtlich der Fahrzeuglängsrichtung horizontalen Querbohrung. Die Haltevorrichtung ist somit als eine nach oben weisende Öse ausgebildet, die der unmittelbaren Befestigung des Zugelements am Fahrzeugrumpf oder einem mit diesem fest verbunden Fahrzeugbauteil dient.

Es ist von Vorteil, wenn auch an dem Fahrzeugrumpf oder an einem mit diesem fest verbundenen Bauteil wenigstens eine vorstehende Lasche befestigt ist, welche eine mit der Querbohrung des Zugelements bzw. des Zwischenelements korrespondierende Querbohrung enthält, und daß ein Arretierbolzen in die Querbohrungen einführbar ist, um die Zugvorrichtung in Transportstellung zu arretieren.

Eine weitere erfindungsgemäße Lösung sieht vor, daß zur Arretierung der Zugvorrichtung am Fahrzeugrumpf in ihrer Transportstellung unmittelbar zwischen dem schwenkbaren Rahmenteil und dem Fahrzeugrumpf eine horizontale Bolzenquerverbindung vorgesehen ist. Diese kann entsprechend der oben beschriebenen Bolzen-Laschen-Verbindung ausgebildet sein. Sie läßt sich auf einfache Weise realisieren und ist zuverlässig in der Handhabung.

Ist das Zugelement als nach oben offener Zughaken ausgebildet, so ist es zweckmäßig, unmittelbar oder mittelbar am Fahrzeugrumpf oberhalb des Zughakens wenigstens eine als Niederhalter ausgebildete vorstehende Lasche mit Querbohrung zu befestigen. Der Niederhalter tritt beim Erreichen der Transportstellung mit dem Zughaken in Eingriff und verhindert das Herausspringen einer Gerätezugstangenöse aus dem Zughaken. Durch die Ausbildung des Niederhalters als Einzel oder Doppellasche kann dieser neben dem Niederhalter auch der Übertragung der von der Gerätezugstange herrührenden Kräfte dienen.

Vorzugsweise ist der Niederhalter als Doppellasche ausgebildet, wobei in der Transportstellung zwischen die beiden Laschen des Niederhalters die Lasche eingreift, die je nach Ausbildung am Zugelement, Zwischenelement oder verschwenkbaren Rahmenteil befestigt ist. Hierdurch kann in Transportstellung das Zugelement gegen seitliche Kräfte abgestützt werden. Die Teilung des Niederhalters ermöglicht die mittige Aufnahme des Zugelements. Der Niederhalter übernimmt dabei neben seiner ursprünglichen Aufgabe gleichzeitig die Aufnahme der Zugkräfte der Gerätezugstange.

Es liegt auf der Hand, die Anordnung der Laschen an dem Fahrzeugrumpf einerseits und dem Zugelement, dem Zwischenelement bzw. dem Rahmenteil andererseits auch im umgekehrten Sinn als beschrieben vorzunehmen, so daß am Fahrzeugrumpf eine Lasche befestigt ist, die zwischen zwei Laschen des Zugelements, des Zwischenelements bzw. des Rahmenteils eingreift.

Es hat sich als vorteilhaft erwiesen und wird gemäß einer weiteren Ausgestaltung der Erfindung vorgeschlagen, den im wesentlichen zylindrischen Arretierbolzen mit wenigstens einer Einschnürung zu versehen, die in dem axialen Bolzenbereich liegt, der bei in die Querbohrungen eingestecktem Arretierbolzen mit der Breite der Zugelementlasche (Zwischenelementlasche, Rahmenteillasche) bzw. deren Querbohrung korrespondiert. Bei der Einschnürung handelt es sich vorzugsweise um eine Abflachung der Bolzenoberseite, die in axialer Richtung durch Stirnflächen begrenzt ist. Die abgeflachte Bolzenoberseite kann konvex gewölbt, insbesondere zylindrisch ausgebildet sein und im wesentlichen den gleichen Krümmungsradius aufweisen, wie die übrige zylindrische Bolzenoberfläche, so daß sie an die zylindrische Innenfläche der Querbohrung angepaßt ist.

Befindet sich die Zugvorrichtung in arretierter Transportstellung, so ist der Arretierbolzen in die Querbohrungen der Laschen des Zugelements, des Zwischenelements bzw. des Rahmenteils und des Niederhalters eingesetzt. Die Hubstreben sind entlastet, so daß die obere, zylindrische Innenfläche der Querbohrung der Zugelementlasche (Zwischenelementlasche, Rahmenteillasche) sich im Bereich der Einschnürung auf dem Arretierbolzen abstützt. Die beiden die Einschnürung begrenzenden Stirnflächen des Arretierbolzens ragen radial über die Querbohrung hinaus und stützen sich axial an den seitlichen Laschenflächen ab. Hierdurch ist der Arretierbolzen gegen eine axiale Verschiebung gesichert.

Die Einschnürung stellt einerseits eine zusätzliche Positionierungshilfe dar. Andererseits vermeidet sie eine unbeabsichtigte Entarretierung der Zugvorrichtung, da vor dem Herausziehen des Arretierbolzens die Hubmittel betätigt werden und die Zugvorrichtung angehoben werden müssen, um die Bolzenachse mit der Bohrungsachse der Zugelementlasche in fluchtende Lage zu bringen, wodurch die Abstützung der Stirnflächen an den seitlichen Laschenflächen aufgehoben wird.

Gemäß einer weiteren bevorzugten Ausgestaltung der Erfindung ist eine am Arretierbolzen angreifende Verriegelungsvorrichtung vorgesehen, die ein unbeabsichtigtes Verschieben des Arretierbolzens verhindert.

Eine derartige Verriegelungseinrichtung ist auch Gegenstand der vorliegenden Erfindung. Die erfindungsgemäße Verriegelungseinrichtung dient allgemein einer Bolzenverbindung zwischen einer Aufnahme und einem zwischen zwei Laschen der Aufnahme teilweise einführbaren Zugelement bzw. von Laschen eines Zwischenelements oder Rahmenteils. Sie ist vielseitig einsetzbar und bewährt sich insbesondere bei einer Zugvorrichtung gemäß vorliegender Erfindung in vorteilhafter Weise. Die Verriegelungseinrichtung enthält ein an der Aufnahme seitlich befestigbares Gehäuse, das im wesentlichen einen Arretierbolzen und einen Übertragungshebel aufnimmt. Der Arretierbolzen ist stirnseitig durch eine ihn aus dem Gehäuse in die Bohrungen der Aufnahme und des Zugelements drängende Druckfeder belastet. Der Übertragungshebel ist mit einem verstellbaren Drehhebel verbunden. Sein Schenkel greift in eine Ausnehmung des Arretierbolzens ein.

Derartige Verriegelungseinrichtungen sind grundsätzlich bei Wagenanhängekupplungen mit senkrechter Bolzenausrichtung bekannt, welche Sicherungselemente zur Sicherung des Arretierbolzens in seiner Schließstellung enthalten. Als Sicherungselemente für einen Kupplungsbolzen werden durch die DEAS24 58 977 ein Betätigungshebel mit einer Hubzunge sowie ein Kontrollbolzen angegeben. Befindet sich der Kupplungsbolzen in Schließstellung, so liegt die Hubzunge an einem Widerlager einer Ausnehmung des Kupplungsbolzens an und läßt sich nur ausklinken, wenn der Kupplungsbolzen etwas angehoben wird. Der Kontrollbolzen ist in die Bewegungsbahn des Kupplungsbolzens einführbar und läßt sich durch einen mit einer Fernbetätigung verbundenen Bedienungsarm des Betätigungshebels beeinflussen. Es wird auch vorgeschlagen, dem Stellhebel für die Fernbetätigung eine Arretiervorrichtung zuzuordnen, die dann auf den Stellhebel wirkt, wenn sich der Kupplungsbolzen in Schließstellung befindet und eine mit dem Stellhebel gleichzeitige, aber davon getrennte manuelle Betätigung verlangt, so daß der Kupplungsbolzen nur bei beidhändiger Betätigung der Fernbedienung in Offenstellung überführt werden kann. Ferner ist der Kupplungsbolzen in Offenstellung von einer Druckfeder beaufschlagt.

Die bekannten Verriegelungseinrichtungen erfüllen noch nicht alle Sicherheitsanforderungen, da insbesondere wegen der waagerechten Ausrichtung des Arretierbolzens dieser nicht durch seine Schwerkraft in geschlossener Stellung gedrängt wird. Es sind daher weitere Sicherungsmaßnahmen wünschenswert.

Erfindungsgemäß wird daher vorgeschlagen, daß die Auslegung der Druckfeder eine Belastung des Arretierbolzens über dessen gesamten Verstellweg, also auch in Schließstellung, ermöglicht und daß an dem Übertragungshebel eine sich am Gehäuse abstützende Drehfeder angreift, die den Schenkel des Betätigungshebels in ständigem Eingriff gegen den Arretierbolzen drückt. Als weitere Sicherungsmaßnahme enthält der Arretierbolzen vorzugsweise die im Zusammenhang mit der Zugvorrichtung beschriebene Einschnürung.

Die erfindungsgemäßen Sicherungsmaßnahmen sind technisch einfach zu realisieren und bieten eine zuverlässige Mehrfachsicherung des Arretierbolzens in Schließstellung, selbst dann, wenn der Arretierbolzen waagerecht ausgerichtet ist.

Vorzugsweise weist das freie Ende des Schenkels ein Widerlager auf, das bei Offenstellung des Arretierbolzens diesen derart abstützt und arretiert, daß der Arretierbolzen nicht selbständig in seine Schließstellung übergehen kann, bevor die Arretierung durch wenigstens teilweises Verschieben des Bolzens in Richtung des Gehäuses aufgehoben wurde.

Ferner ist es von Vorteil, daß an dem Drehhebel ein Zug-Druck-Kabel angreift, welches mit einem in der Fahrzeugkabine angeordneten Bedienungshebel derart in Verbindung steht, daß der Bedienungshebel eindeutig die verschiedenen Betriebsstellungen des Arretierbolzens anzeigt.

Es ist zweckmäßig, den Bedienungshebel so auszubilden, daß er wenigstens in der Lage, die der Arretierposition des Arretierbolzens entspricht, manuell lösbar arretierbar ist.

Weitere vorteilhafte Ausgestaltungen und Weiterbildungen der Erfindung gehen aus den Unteransprüchen hervor.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die perspektivische Rückansicht eines Ackerschleppers mit einer erfindungsgemäßen Zugvorrichtung und teilweise in Explosionsdarstellung skizzierten Hubelementen,
- Fig. 2: die Explosionsdarstellung einer erfindungsgemäßen Zugvorrichtung mit Zughaken und Hydraulikzylinder,
- Fig. 3: die Explosionsdarstellung einer erfindungsgemäßen Zugvorrichtung mit Zugpendel,
- Fig. 4: die Explosionsdarstellung einer weiteren erfindungsgemäßen Zugvorrichtung mit Zugpendel,
- Fig. 5: die Explosionsdarstellung einer erfindungsgemäßen Verriegelungsvorrichtung und
- Fig. 6: die schematische Darstellung verschiedener Stellungen der Verriegelunsvorrichtung und des Bedienungshebels.

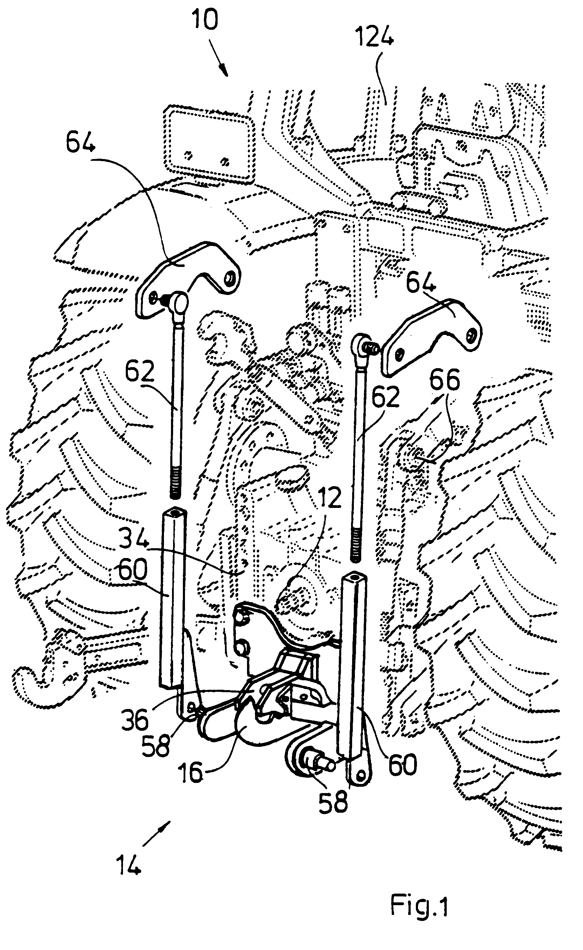

In der aus Fig. 1 hervorgehenden perspektivischen Rückansicht eines Ackerschleppers 10 ist unterhalb einer lediglich angedeuteten Zapfwelle 12 eine erfindungsgemäße Zugvorrichtung 14 erkennbar. Wesentliches Element dieser Zugvorrichtung 14 ist ein Zughaken 16, in den die nicht dargestellte Koppelöse einer mit einem angehängten Gerät verbundenen Gerätezugstange, beispielsweise der Deichsel eines angehängten Wagens, einhängbar ist. Zum Einhängen läßt sich der Haken 16 aus der dargestellten Transportstellung nach unten in eine abgesenkte Stellung verschwenken.

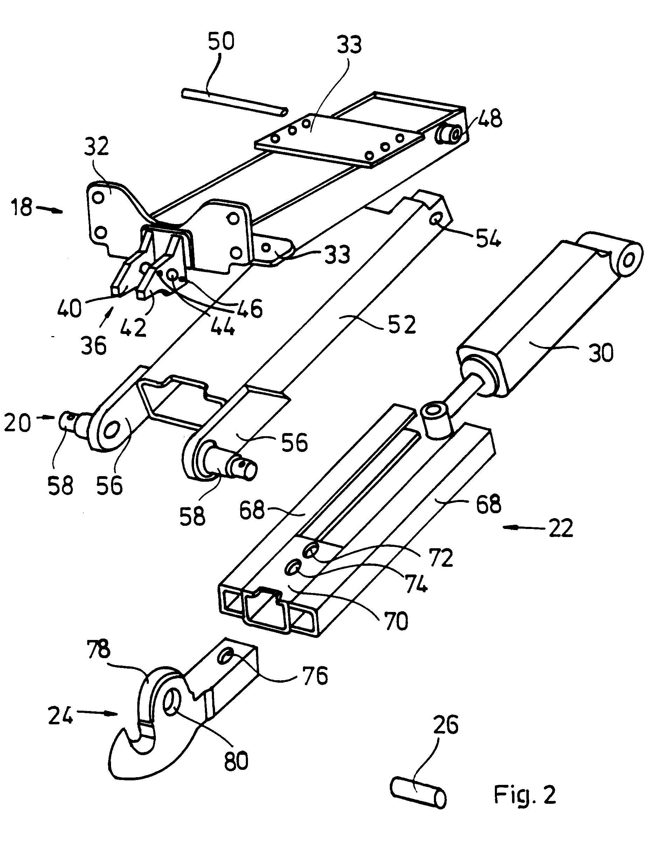

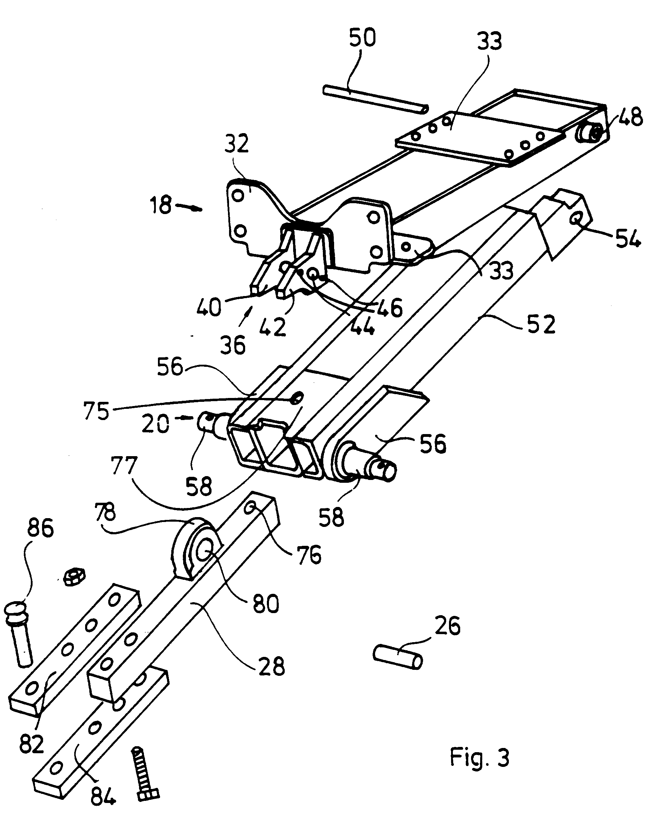

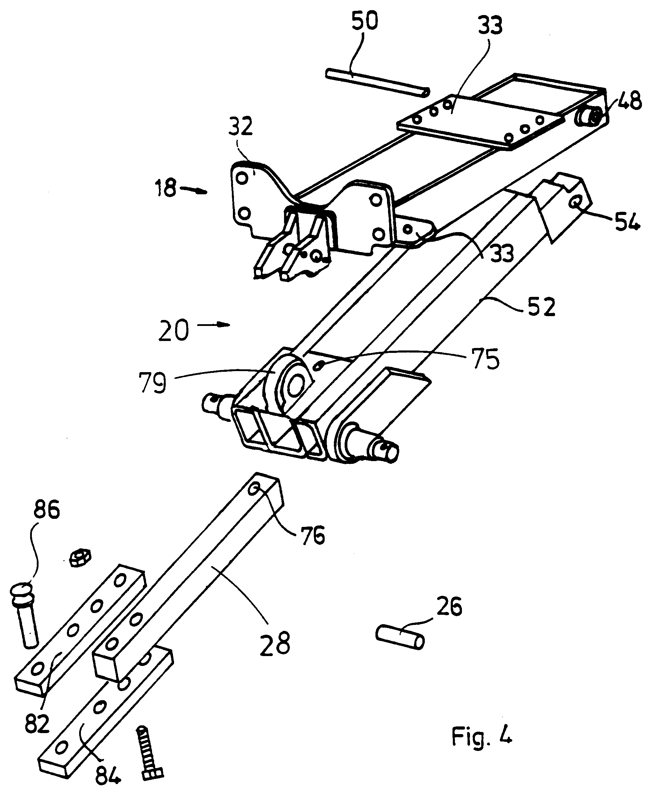

Elemente der Zugvorrichtung 14 gehen aus der Fig. 2 hervor, die in Explosionsdarstellung ein oberes Rahmenteil 18, ein unteres Rahmenteil 20, ein als Führungsteil 22 ausgebildetes Zwischenelement, einen Zughaken 24, einen Arretierbolzen 26 und einen Hydraulikzylinder 30 zeigt. Aus den Fig. 3 und 4 geht eine Zugvorrichtung mit einem oberen Rahmenteil 18 und einem unteren Rahmenteil 20 hervor. An Stelle des in Fig. 2 gezeigten Zughakens 24 ist in den Fig. 3 und 4 ein Zugpendel 28 vorgesehen. Das Zugpendel 28 wird hier unmittelbar von dem unteren Rahmenteil 20 aufgenommen, so daß weder ein Führungsteil noch ein Hydraulikzylinder vorgesehen sind. Gleiche Bauteile wurden in den Fig. 2, 3 und 4 mit gleichen Bezugsziffern belegt. Ferner beziehen sich räumliche Angaben, wie "hinten" und "vorn" auf die Lage hinsichtlich der Schlepperausrichtung.

Gemäß Fig. 2 enthält das obere Rahmenteil 18 eine Reihe von Befestigungsplatten 32, 33 mit Befestigungsbohrungen, die der starren Befestigung des oberen Rahmenteils 18 an dem Hinterachsdifferentialgehäuse 34 des Schleppers 10 dienen. Die hintere, senkrecht ausgerichtete Befestigungsplatte 32 trägt einen Niederhalter 36, welcher im wesentlichen aus zwei senkrecht ausgerichteten, sich nach hinten erstreckenden Laschen 40, 42 besteht. Die Laschen 40, 42 enthalten je eine Querbohrung 44, die miteinander korrespondieren. Eine der Laschen 42 enthält darüber hinaus Befestigungsbohrungen 46 für eine Verriegelungseinrichtung. Im vorderen Bereich sind an beiden Seiten des oberen Rahmenteils 18 jeweils eine quer und horizontal ausgerichtete Hülse 48 befestigt, die der Aufnahme einer Schwenkachse 50 dienen.

Das untere Rahmenteil 20 ist in der Art einer Kassette ausgebildet und enthält einen im wesentlichen rechteckförmigen Kanal 52. Es weist in seinem vorderen Bereich Lagerstellen 54 zur Aufnahme der Schwenkachse 50 auf, so daß sein hinteres Ende um die Schwenkachse 50 in vertikaler Richtung verschwenkbar ist. Am hinteren Ende des rechteckförmigen Kanals 52 sind seitlich zwei Verstärkungsglieder 56 festgelegt, die je einen quer nach außen und in horizontaler Richtung ausgerichteten Bolzen 58 tragen. In jeden Bolzen 58 ist das untere Ende eines Hubgestänges einhängbar, das dem Anheben und Absenken des unteren Rahmenteils 20 dient.

Geeignete Hubgestänge sind in Fig. 1 angedeutet. Sie bestehen aus einer unteren Hubstange 60 mit quadratischem Querschnitt, in die ein Ende einer oberen stabförmigen Hubstange 62 einschraubbar ist. Das obere Ende der oberen Hubstange 62 ist in einen Kraftarm 64 einhängbar, der von einer lediglich angedeuteten Hubwelle 66 in vertikaler Richtung verschwenkbar ist.

In den rechteckförmigen Kanal 52 des unteren Rahmenteils 20 ist gemäß Fig. 2 das Führungsteil 22 von hinten einschiebbar. Dieses besteht im wesentlichen aus zwei seitlichen U-förmigen Führungsschienen 68, deren hintere Bereiche durch einen rohrförmigen Führungskanal 70 mit im wesentlichen rechteckförmigem Querschnitt miteinander verbunden sind. Zwischen der Schwenkachse 50 und dem Führungsteil ist ein Hydraulikzylinder 30 angeordnet, zu dessen Befestigung die Bohrung 72 im Führungskanal 70 dient. Es handelt sich vorzugsweise um einen zweiseitig beaufschlagbaren, von der Fahrzeugkabine aus bedienbaren Hydraulikzylinder 30, durch den das Führungsteil 22 innerhalb des unteren Rahmenteils 20 nach vorn und nach hinten verschiebbar ist.

In den Führungskanal 70 ist gemäß Fig. 2 ein Zughaken 24 einführbar und durch einen nicht dargestellten Bolzen sicherbar, der durch die Bohrung 74 im Führungskanal 70 und die Bohrung 76 im Zughaken 24 einsteckbar ist. Durch diese Anordnung läßt sich der Zughaken 24 gemeinsam mit dem Führungsteil 22 mit Hilfe des Hydraulikzylinders 30 ein und ausfahren und in vertikaler Richtung mit Hilfe des Hubgestänges verschwenken. Auf der Oberseite des Zughakens 24 ist eine als Lasche 78 ausgebildete Haltevorrichtung angeformt, die eine horizontal ausgerichtete Querbohrung 80 enthält und die Form einer Öse einnimmt. Bei angehobenem unteren Rahmenteil 20 und eingefahrenem Führungsteil 22 liegt die Lasche 78 des Zughakens 24 zwischen den beiden Laschen 40 und 42 des oberen Rahmenteils 18, und die Querbohrungen 44, 80 aller drei Laschen 40, 42 und 78 fluchten miteinander. In diese Querbohrungen 44, 80 ist ein Arretierbolzen 26 einführbar, wodurch der Zughaken 24 unmittelbar an dem oberen Rahmenteil 18 und damit am Fahrzeugrumpf festgelegt ist. Kräfte, die auf den Zughaken 24 wirken, werden unmittelbar in das obere Rahmenteil 18 eingeleitet.

Das in Fig. 3 dargestellte Zugpendel 28 ist unmittelbar in einen nach beiden Seiten offenen Führungskanal 77 des unteren Rahmenteils 20 einsteckbar und unter Zuhilfenahme der Bohrungen 75 und 76 durch einen nicht dargestellten Bolzen sicherbar. Die Ausbildung der ösenförmigen Lasche 78 des Zugpendels 28 entspricht der anhand der Fig. 2 beschriebenen. Mit dem hinteren Ende des Zugpendels 28 ist eine obere und eine untere Zuglasche 82, 84 verschraubbar. Die nicht dargestellte Öse einer zu kuppelnden Deichsel kann durch einen Kupplungsbolzen 86 aufgenommen werden. Eine den Kupplungsbolzen 86 sichernde Vorrichtung wurde nicht dargestellt.

Die Ausbildung gemäß Fig. 4 unterscheidet sich von der in Fig. 3 dargestellten durch die Anordnung der Lasche. Während gemäß Fig. 3 die Lasche 78 an dem Zugpendel 28 befestigt ist, ist gemäß Fig. 4 eine Lasche 79 unmittelbar an dem unteren Rahmenteil 20, und zwar oberhalb des Führungskanals 77 festgelegt.

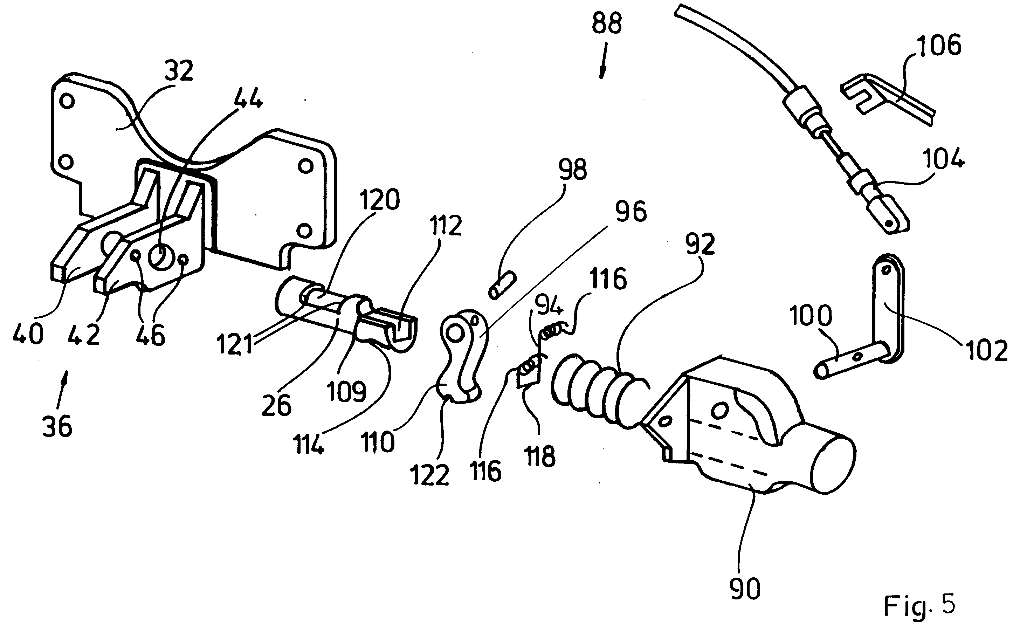

In Fig. 5 sind die wesentlichen Elemente einer erfindungsgemäßen Verriegelungsvorrichtung 88 in Explosionsdarstellung gezeigt. Links in der Fig. 5 ist die senkrecht ausgerichtete Befestigungsplatte 32 des oberen Rahmenteils 18 mit den beiden Laschen 40 und 42 des Niederhalters 36 erkennbar. Die Lasche 42 weist zwei Befestigungsbohrungen 46, beispielsweise Gewindebohrungen auf, die der Befestigung des Gehäuses 90 der Verriegelungsvorrichtung 88 dienen.

In das Gehäuse 90 ist eine wendelförmige Druckfeder 92, eine Drehfeder 94, ein Übertragungshebel 96 und der Arretierbolzen 26 eingesetzt. Der Arretierbolzen 26 ragt aus der Öffnung des Gehäuses 90 heraus und greift in die Querbohrungen 44 der Laschen 42, 40 wenigstens teilweise ein. Die Druckfeder 92 liegt an der inneren Stirnseite des Arretierbolzens 26 an und ist hinsichtlich Länge und Spannkraft so ausgelegt, daß sie den Arretierbolzen 26 über dessen ganzen Verstellweg unter Druck setzt und bestrebt ist, den Arretierbolzen 26 aus dem Gehäuse 90 heraus in seine Verriegelungsstellung zu drücken bzw. ihn in dieser Stellung zu halten.

Der Übertragungshebel 96 ist durch einen Stift 98 mit einer Welle 100 drehfest verbindbar. Die Welle 100 erstreckt sich durch das Gehäuse 90 und trägt einen außerhalb des Gehäuses 90 angeordneten Drehhebel 102, der mit einem Ende eines Zug-Druck-Kabels 104, dessen Ummantelung sich an einem Chassisteil 106 abgestützt, verbunden ist. Das andere Ende des Zug-Druck-Kabels 104 ist mit einem Bedienungshebel 108 verbunden, der der Einstellung der Drehlage des Übertragungshebels 96 und damit auch der Lage des Arretierbolzens 26 dient. Der Übertragungshebel 96 greift mit einem Schenkel 110 in eine Längsnut 112 und eine Querbohrung 114 des Arretierbolzens 26 ein. Er wird durch die Drehfeder 94 belastet und drängt den Arretierbolzen 26 in die Verriegelungsstellung. Die Drehfeder 94 weist zwei konzentrisch zur Welle 100 verlaufende Wendelabschnitte 116 auf, deren Enden sich an dem Gehäuse 90 abstützen. Die Wendelabschnitte 116 sind miteinander durch einen Bügel 118 verbunden, der an dem Übertragungshebel 96 anliegt und diesen vorspannt.

Der Arretierbolzen 26 ist im wesentlichen zylindrisch ausgebildet und weist zwei Abschnitte unterschiedlichen Durchmessers auf, zwischen denen sich eine Stirnfläche 109 ausbildet. Der in die Querbohrungen 44, 80 der Laschen 40, 42, 78 eingreifende Abschnitt hat den etwas kleineren Durchmesser, so daß sich die Stirnfläche 109 in der Verriegeltenstellung des Arretierbolzens 26 an der Oberfläche der Lasche 42 abstützt und ein weiteres Eindringen des Arretierbolzens 26 in die Querbohrungen 44, 80 verhindert.

Im mittleren Bereich des Abschnittes kleineren Durchmessers ist der Verriegelungsbolzen 26 oben eingeschnürt, d. h. in seinem Durchmesser verringert. Die Einschnürung 120 hat in etwa die Breite der Lasche 78, 79 des Zughakens 24, des Zugpendels 28 bzw. des Rahmenteils 20 und nimmt eine Lage ein, die in der Verriegelungsstellung mit der Lasche 78, 79 korrespondiert. Bei der Einschnürung 120 handelt es sich um eine Abflachung der Bolzenoberseite, die in axialer Richtung durch Stirnflächen 121 begrenzt ist. Die abgeflachte Bolzenoberseite ist zylindrisch gewölbt ausgebildet und weist im wesentlichen den gleichen Krümmungsradius auf, wie die übrige (untere) zylindrische Bolzenoberfläche. Damit ist sie an die zylindrische Innenfläche der Querbohrung 80 angepaßt.

Das freie Ende des Schenkels 110 des Übertragungshebels 96 weist eine quer zur Arretierbolzenausrichtung verlaufende Einkerbung 122 auf, welche ein Widerlager bildet. Das Widerlager stützt sich bei nicht verriegeltem Arretierbolzen 26 an einer Kante der Querbohrung 114 ab und legt so eine Bereitschaftsstellung fest, die nur überwunden wird, wenn der Arretierbolzen 26 etwas weiter in das Gehäuse 90 hineingezogen oder gedrückt und damit aus der Querbohrung 42 heraus bewegt wird. Diese Bewegung des Arretierbolzens 26 kann einerseits durch den Bedienungshebel 108 ausgelöst werden. Andererseits wird, wenn das Zugelement 24, 28 in seine Transportstellung angehoben wird und die Lasche 78, 79 ihre Stellung zwischen den beiden Laschen 40 und 42 einnimmt, der Arretierbolzen 26 von der Lasche 78, 79 zurück gedrückt, da er in seiner Bereitschaftsstellung mit seinem Ende etwas in den Schlitz zwischen den beiden Laschen 40 und 42 hinein ragt und da sein Ende abgerundet ist. Durch das Zurückziehen oder -drücken des Arretierbolzens 26 wird die Bereitschaftsstellung des Arretierhebels 26 entriegelt.

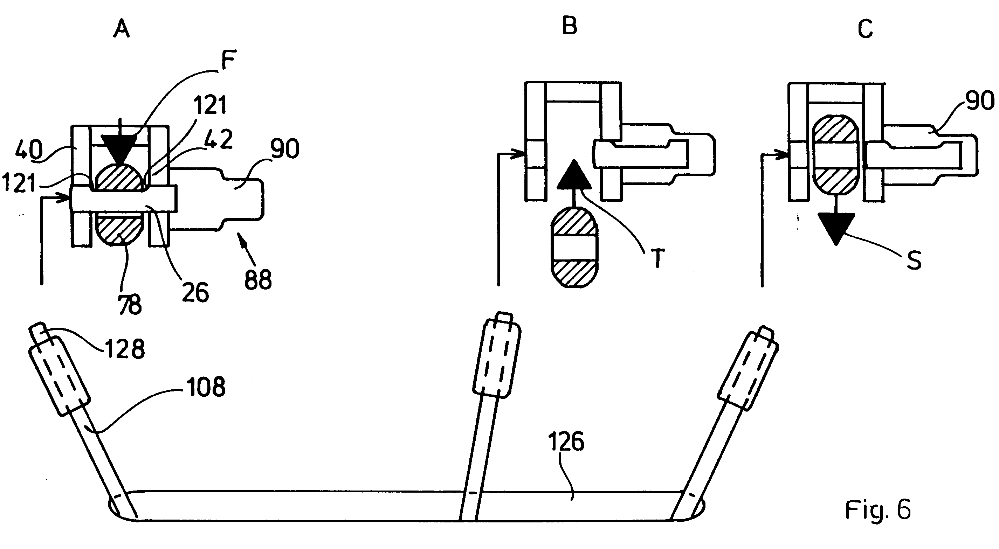

Aus Fig. 6 gehen drei Stellungen A, B und C des Arretierbolzens 26 und des Bedienungshebels 108 hervor. Im oberen Bereich der Fig. 6 wird jeweils die Verriegelungsvorrichtung 88 und im unteren Bereich die zugehörige Stellung des Bedienungshebels 108, der innerhalb der Fahrzeugkabine 124 in einem Schlitz 126 der Bedienungskonsole geführt ist, schematisch dargestellt. Wegen der Verwendung eines Zug-Druck-Kabels 104 besteht ein eindeutiger Zusammenhang zwischen der Stellung des Bedienungshebels 108 und der Lage des Arretierbolzens 26. Daher kann an der Lage des Bedienungshebels 108 in der Fahrzeugkabine 124 der Verriegelungszustand des Arretierbolzens 26 abgelesen werden.

Links in der Fig. 6 ist die arretierte oder verriegelte Stellung A der Verriegelungsvorrichtung 88 dargestellt, bei der der Bedienungshebel 108 an einem Ende des Schlitzes 126, der einen Anschlag bildet, anliegt. Der Arretierbolzen 26 erstreckt sich durch die drei Querbohrungen 44, 80 der Laschen 40, 78 und 42. Durch die von oben auf die Lasche 78 des Zugelements 24, 28 wirkende Kraft F greift die Lasche 78 zwischen die beiden Stirnflächen 121 im Bereich der Einschnürung 120 des Arretierbolzens 26 ein, so daß der Arretierbolzen 26 gegen seitliches Verschieben gesichert ist. Durch Anheben der Lasche 78 kann diese Sicherung aufgehoben werden. Der Bedienungshebel 108 läßt sich in seiner Stellung A durch nicht näher gezeigte Arretiermittel festlegen. Die Festlegung wird gelöst, indem die Bedienungsperson einen Knopf 128 an dem freien Ende des Bedienungshebels 108 gegen die Kraft einer nicht gezeigten Feder herunter drückt. Dieses Merkmal stellt eine weitere Sicherung des Arretierbolzens 26 vor ungewolltem Entriegeln dar.

Rechts in der Fig. 6 ist die offene Stellung C der Verriegelungsvorrichtung 88 dargestellt, bei der Arretierbolzen 26 durch Verschwenken des Bedienungshebels 108 bis zum rechten Ende des Schlitzes 126 in das Gehäuse 90 eingezogen ist, so daß sich das freie Ende des Arretierbolzens 26 lediglich in die Querbohrung 44 der Lasche 42 erstreckt. Die Lasche 78 des Zugelements 24, 28 ist damit frei, so daß das Zugelement 24, 28 infolge der Schwerkraft S und/oder einer Betätigung der Hubmittel aus der Transportstellung in seine abgesenkte Stellung übergehen kann.

Wenn die Bedienungsperson den in die offene Stellung C gebrachten Bedienungshebel 108 wieder losläßt, wird dieser durch die Kräfte der Druckfeder 92 und der Drehfeder 94 und die Übertragung durch das Zug-Druck-Kabel 104 selbsttätig in seine in der Mitte der Fig. 6 dargestellte Bereitschaftsstellung B zurückgestellt. In der Bereitschaftsstellung B stützt sich der Arretierbolzen 26 an dem Widerlager 122 des Übertragungshebels 96 derart ab, daß er nicht weiter aus dem Gehäuse 90 heraustritt und lediglich sein freies abgerundetes Ende in den zwischen den beiden Laschen 40 und 42 ausgebildeten Zwischenraum eingreift. Wird die Lasche 78 mit der Zugvorrichtung in die Transportstellung angehoben, wie es der Pfeil T andeutet, so schiebt die Lasche 78 des Zugelements 24, 28 den Arretierbolzen 26 etwas in das Gehäuse 90 zurück, wodurch die Abstützung an dem Widerlager 122 aufgehoben wird und der Arretierbolzen 26 unter der Wirkung der Druckfeder 92, der Drehfeder 94 und/oder des Bedienungshebels 108 vollständig in die Querbohrungen 44, 80 eintreten kann (Stellung A).

## Patentansprüche

1. Zugvorrichtung für ein landwirtschaftliches oder industrielles Fahrzeug (10) mit einem durch Hubmittel (60, 62, 64, 66) in vertikaler Richtung zwischen einer oberen Transportstellung und einer abgesenkten Stellung schwenkbar am Fahrzeugrumpf (34) angelenkten Rahmenteil (20), dessen freies, verschwenkbares Ende ein vorstehendes, unmittelbar oder mittelbar vom Rahmenteil (20) geführtes und in wenigstens einer Fahrzeuglängsposition arretierbares Zugelement (24, 28) aufnimmt, sowie mit Arretiermitteln, durch die Zugvorrichtung (14) in ihrer Transportstellung gegenüber dem Fahrzeugrumpf (34) festlegbar ist, dadurch gekennzeichnet, daß unmittelbar am Zugelement (24, 28) oder an einem vom Rahmenteil (20) geführten Zwischenelement (22), an dem das Zugelement (24) befestigbar ist, eine Haltevorrichtung (78) angebracht ist, die für eine in die Transportstellung angehobene Zugvorrichtung (14) der Arretierung des Zugelements (24, 28) am Fahrzeugrumpf (34) dient.

2. Zugvorrichtung nach Anspruch 1, dadurch gekennzeichnet, daß zur Arretierung unmittelbar zwischen dem Zugelement (24, 28) oder dem Zwischenelement (22) und dem Fahrzeugrumpf (34) eine horizontale Bolzenquerverbindung vorgesehen ist.

3. Zugvorrichtung für ein landwirtschaftliches oder industrielles Fahrzeug (10) mit einem durch Hubmittel (60, 62, 64, 66) in vertikaler Richtung zwischen einer oberen Transportstellung und einer abgesenkten Stellung schwenkbar am Fahrzeugrumpf (34) angelenkten Rahmenteil (20), dessen freies, verschwenkbares Ende ein vorstehendes, unmittelbar oder mittelbar vom Rahmenteil (20) geführtes und in wenigstens einer Fahrzeuglängsposition arretierbares Zugelement (24, 28) aufnimmt, sowie mit Arretiermitteln, durch die Zugvorrichtung (14) in ihrer Transportstellung gegenüber dem Fahrzeugrumpf (34) festlegbar ist, dadurch gekennzeichnet, daß zur Arretierung zwischen dem Rahmenteil (20) und dem Fahrzeugrumpf (34) eine horizontale Bolzenquerverbindung vorgesehen ist.

4. Zugvorrichtung nach Anspruch 2 oder 3, dadurch gekennzeichnet, daß die Haltevorrichtung wenigstens eine an der Oberseite des Zugelements (24, 28), des Zwischenelements (22) bzw. des Rahmenteils (20) angebrachte Lasche (78, 79) mit einer horizontalen Querbohrung (80) enthält, daß am Fahrzeugrumpf (34) wenigstens eine vorstehende Lasche (40, 42) vorgesehen ist, welche eine mit der Querbohrung (80) des Zugelements (24, 28), des Zwischenelements (22) bzw. des Rahmenteils (20) korrespondierende Querbohrung (44) enthält, und daß ein Arretierbolzen (26) in die Querbohrungen (44, 80) einführbar ist, um die Zugvorrichtung (14) in Transportstellung zu arretieren.

5. Zugvorrichtung nach einem der Ansprüche 1 bis 4, dadurch gekennzeichnet, daß das Zugelement ein nach oben offener Zughaken (24) ist, daß am Fahrzeugrumpf (34) unmittelbar oder mittelbar wenigstens eine als Niederhalter (36) ausgebildete vorstehende Lasche (40, 42) befestigt ist, die beim Erreichen der Transportstellung mit dem Zughaken (24) in Eingriff tritt, um ein Herausspringen einer Gerätezugstange aus dem Zughaken (24) zu verhindern.

6. Zugvorrichtung nach einem der Ansprüche 1 bis 5, dadurch gekennzeichnet, daß das Zugelement (24, 28), das Zwischenelement (22) bzw. das Rahmenteil (20) eine Lasche (78, 79) trägt, die bei der Transportstellung zwischen zwei an dem Fahrzeugrumpf (34) befestigte Laschen (40, 42) eingreift.

7. Zugvorrichtung nach einem der Ansprüche 4 bis 6, dadurch gekennzeichnet, daß ein im wesentlichen zylindrischer Arretierbolzen (26) in seinem axialen Bereich, der bei in die Querbohrungen (42, 80, 40) eingestecktem Arretierbolzen (26) innerhalb der Querbohrung (80) der Lasche (78, 79) des Zugelements (24, 28), des Zwischenelements (22) bzw. des Rahmenteils (20) liegt, eine Einschnürung (120), insbesondere eine Abflachung an der Bolzenoberseite aufweist.

8. Zugvorrichtung nach einem der Ansprüche 2 bis 7, dadurch gekennzeichnet, daß eine am Arretierbolzen (26) angreifende Verriegelungsvorrichtung (88) vorgesehen ist, die ein unbeabsichtigtes Verschieben des Arretierbolzens (26) verhindert.

9. Zugvorrichtung nach einem der Ansprüche 1 bis 8, dadurch gekennzeichnet, daß das Rahmenteil (20) ein durch einen Antrieb, vorzugsweise durch einen Hydraulikzylinder (30) in Fahrzeuglängsrichtung verschiebbares Zwischenelement (22) aufnimmt, an welchem das Zugelement (24, 28) befestigt ist.

10. Verriegelungseinrichtung für eine Bolzenverbindung zwischen einer Aufnahme (42) und einem Element (78), das quer zur Bolzenachse ausgerichteten Kräften ausgesetzt ist, mit einem an der Aufnahme (42) befestigbaren Gehäuse (90), das einen Arretierbolzen (26), der stirnseitig durch eine ihn aus dem Gehäuse (90) drängende Druckfeder (92) belastet ist, und einen durch einen Drehhebel (102) verstellbaren Übertragungshebel (96), dessen Schenkel (110) in eine Ausnehmung (112, 114) des Arretierbolzens (26) eingreift, aufnimmt, insbesondere für eine Zugvorrichtung (14) nach einem der Ansprüche 1 bis 9, dadurch gekennzeichnet, daß die Auslegung der Druckfeder (92) eine Belastung des Arretierbolzens (26) über dessen gesamten Verstellweg ermöglicht und daß an dem Übertragungshebel (96) eine sich am Gehäuse (90) abstützende Drehfeder (94) angreift, die den Schenkel (110) des Übertragungshebels (96) in ständigem Eingriff gegen den Arretierbolzen (26) drückt.

11. Verriegelungseinrichtung nach Anspruch 10, dadurch gekennzeichnet, daß der Schenkel (110) ein Widerlager (122) aufweist, das bei Offenstellung des Arretierbolzens (26) diesen derart abstützt, daß der Arretierbolzen (26) nicht selbständig in seine Schließstellung übergehen kann, bevor er wenigstens teilweise in entgegengesetzter Richtung verstellt wurde.

12. Verriegelungseinrichtung nach Anspruch 10 oder 11, dadurch gekennzeichnet, daß an dem Drehhebel (94) ein Zug-Druck-Kabel (104) angreift, welches mit einem in der Fahrzeugkabine angeordneten Bedienungshebel (108) derart in Verbindung steht, daß der Bedienungshebel (108) eindeutig die verschiedenen Betriebsstellungen des Arretierbolzens (26) anzeigt.

13. Verriegelungseinrichtung nach einem der Ansprüche 10 bis 12, dadurch gekennzeichnet, daß der Drehhebel (94) mit einem in der Fahrzeugkabine angeordneten Bedienungshebel (108) verbunden ist, der derart ausgebildet ist, daß er wenigstens in seiner der Arretierposition des Arretierbolzens (26) entsprechenden Lage manuell lösbar arretierbar ist.

## Claims

1. A towing arrangement for an agricultural or industrial vehicle (10) with a frame part (20) pivoted to the vehicle rear (34) and pivoting in the vertical direction through lift means (60, 62, 64, 66) between an upper, transport position and a lowered position, the free, swinging end of the frame part receiving a projecting towing element (24, 28) which is guided directly or indirectly by the frame part (20) and can be arrested in at least one vehicle longitudinal position, further with arresting means, through which the towing arrangement (14) can be fixed in its transport position relative to the vehicle rear (34), characterized in that a retaining device (78) is fitted directly on the towing element (24, 28) or on an intermediate element (22), which is guided by the frame part (20) and to which the towing element (24) can be fixed, the retaining device serving to arrest the towing element (24, 28) on the vehicle rear (34) for a towing arrangement (14) raised to the transport position.

2. A towing arrangement according to claim 1, characterized in that a horizontal cross-pin connection is provided directly between the towing element (24, 28) or the intermediate element (22) and the vehicle rear (34) for the arresting.

3. A towing arrangement for an agricultural or industrial vehicle (10) with a frame part (20) pivoted to the vehicle rear (34) and pivoting in the vertical direction through lift means (60, 62, 64, 66) between an upper, transport position and a lowered position, the free, swinging end of the frame part receiving a projecting towing element (24, 28) which is guided directly or indirectly by the frame part (20) and can be arrested in at least one vehicle longitudinal position, further with arresting means, through which the towing arrangement (14) can be fixed in its transport position relative to the vehicle rear (34), characterized in that a horizontal cross-pin connection is provided between the frame part (20) and the vehicle rear (34) for the arresting.

4. A towing arrangement according to claim 2 or 3, characterized in that the retaining device includes at least one lug (78, 79) fitted on the upper side of the towing element (24, 28), the intermediate element (22) or the frame part (20), with a horizontal transverse bore (80), in that at least one projecting lug (40, 42) is provided on the vehicle rear (34) and has a transverse bore (44) corresponding with the transverse bore (80) of the towing element (24, 28), the intermediate element (22) or the frame part (20), and in that an arresting pin (26) can be fitted in the transverse bores (44, 80) in order to arrest the towing arrangement (14) in the transport position.

5. A towing arrangement according to any of claims 1 to 4, characterized in that the towing element is an upwardly open towing hook (24), that at least one projecting lug (40, 42) formed as a hold-down (36) is fixed on the vehicle rear (34) directly or indirectly and comes into engagement with the towing hook (24) when the transport position is reached, in order to prevent an implement bar jumping out of the towing hook (24).

6. A towing arrangement according to any of claims 1 to 5, characterized in that the towing element (24, 28), the intermediate element (22) or the frame part (20) carries a lug (78, 79) which engages in the transport position between two lugs (40, 42) fixed on the vehicle rear (34).

7. A towing arrangement according to any of claims 4 to 6, characterized in that a substantially cylindrical arresting pin (26) has a narrowing (120), in particular a flat on the upper side of the pin, in its axial region which lies inside the transverse bore (80) of the lug (78, 79) of the towing element (24, 28), the intermediate element (22) of the frame part (20), with the arresting pin (26) inserted in the transverse bores (42, 80, 40).

8. A towing arrangement according to any of claims 2 to 7, characterized in that a locking arrangement (88) engaging the arresting pin (26) is provided and prevents inadvertent shifting of the arresting pin (26).

9. A towing arrangement according to any of claims 1 to 8, characterized in that the frame part (20) receives an intermediate element (22) which can be moved in the vehicle longitudinal direction by a driver, preferably a hydraulic cylinder (30), and to which the towing element (24, 28) is fixed.

10. A locking arrangement for a pin connection between a receptacle (42) and an element (78) which is subjected to forces transverse to the pin axis, with a housing (90) which can be fixed to the receptacle (42) and which receives an arresting pin (26) which is biased on the end by a compression spring (92) pressing it out of the housing (90), and a transmission lever (96) which can be shifted by a rotary lever (102) and whose arm (110) engages in a recess (112, 114) of the arresting pin (26), especially for a towing arrangement according to any of claims 1 to 9, characterized in that the design of the compression spring (92) makes loading of the arresting pin (26) possible over the whole of its adjustment stroke, and in that a torsion spring (94) abutting the housing (90) engages on the transmission lever (96) and biases the arm (110) of the transmission lever (96) into constant engagement against the arresting pin (26).

11. A locking arrangement according to claim 10, characterized in that the arm (110) has an abutment (122) which so engages the arresting pin (26) in the open position thereof that the arresting pin (26) cannot move automatically into its closed position before it has been moved at least partially in the opposition direction.

12. A locking arrangement according to claim 10 or 11, characterized in that a push-pull cable (104) engages the rotary lever (102) and is so connected to an operator lever (108) arranged in the vehicle cab that the operator lever (108) indicates the different operating positions of the arresting pin unambiguously.

13. A locking arrangement according to any of claims 10 to 12, characterized in that the rotary lever (102) is connected to an operator lever (108) in the vehicle cab, which lever is so designed that it can be stopped manually and releasably in its position corresponding to the arresting position of the arresting pin (26).

## Revendications

1. Dispositif de traction pour un véhicule agricole ou industriel (10) comportant une partie formant cadre (20), qui est articulée sur la carrosserie (34) du véhicule à l'aide de moyens de levage (60, 62, 64, 66) de manière à pouvoir pivoter dans une direction verticale entre une position haute de transfert et une position abaissée et dont l'extrémité pivotante libre loge un élément de traction saillant (24, 28), qui est guidé directement ou indirectement par l'élément formant cadre (20) et peut être bloquée dans au moins une position longitudinale du véhicule, ainsi que des moyens de blocage, à l'aide desquels le dispositif de traction (14) peut être fixé dans sa position de transport par rapport à la carrosserie (34) du véhicule, caractérisé en ce que directement sur l'élément de traction (24, 28) ou sur un élément intercalaire (22) qui est guidé par la partie formant cadre (20) et sur lequel l'élément de traction (24) peut être fixé, est monté un dispositif de retenue (78), qui est utilisé pour le blocage de l'élément de traction (24, 28) sur la carrosserie (34) du véhicule, pour un dispositif de traction (14) soulevé dans la position de transport.

2. Dispositif de traction selon la revendication 1, caractérisé en ce qu'il est prévu un système de liaison transversale horizontale en forme de boulon pour réaliser le blocage directement entre l'élément de traction (24, 28) ou l'élément intermédiaire (22) et la carrosserie (24) du véhicule.

3. Dispositif de traction pour un véhicule agricole ou industriel (10) comportant une partie formant cadre (20), qui est articulée sur la carrosserie (34) du véhicule à l'aide de moyens de levage (60, 62, 64, 66) de manière à pouvoir pivoter dans une direction verticale entre une position haute de transfert et une position abaissée et dont l'extrémité pivotante libre loge un élément de traction saillant (24, 28), qui est guidé directement ou indirectement par la partie formant cadre (20) et peut être bloquée dans au moins une position longitudinale du véhicule, ainsi que des moyens de blocage, à l'aide desquels le dispositif de traction (14) peut être fixé dans sa position de transport par rapport à la carrosserie (34) du véhicule, caractérisé en ce qu'il est prévu un système de liaison transversale horizontale en forme de boulon pour réaliser le blocage entre la partie formant cadre (20) et la carrosserie (34) du véhicule.

4. Dispositif de traction selon la revendication 2 ou 3, caractérisé en ce que le dispositif de retenue contient au moins une patte (78, 79), qui est disposée sur le côté supérieur de l'élément de traction (24, 28), de l'élément intermédiaire (22) ou de la partie formant cadre (20), contient un perçage transversal horizontal (80), que sur la carrosserie (34) du véhicule est prévue au moins une patte saillante (40, 42), qui contient un perçage transversal (44), qui correspond au perçcage transversal (80) de l'élément de traction (24, 28), de l'élément intermédiaire (22) ou de la partie formant cadre (20), et qu'un boulon de blocage (26) peut être introduit dans les perçages transversaux (44, 80) pour bloquer le dispositif de traction (14) dans sa position de transport.

5. Dispositif de traction selon l'une des revendications 1 à 4, caractérisé en ce que l'élément de traction est un crochet de traction (24) ouvert vers le haut et que sur la carrosserie (34) du véhicule est fixée, directement ou indirectement, au moins une patte saillante (40, 42), qui est agencée sous la forme du dispositif de serrage (36) et qui, lorsque la position de transport est atteinte, engrène avec le crochet de traction (24), pour empêcher un dégagement brusque d'une barre d'attelage de l'appareil hors du crochet de traction (24).

6. Dispositif de traction selon l'une des revendications 1 à 5, caractérisé en ce que l'élément de traction (24, 28), l'élément intermédiaire (22) ou la partie formant cadre (20) porte une patte (78, 79) qui, dans la position de transport, s'engage entre deux pattes (40, 42) fixées sur la carrosserie (34) du véhicule.

7. Dispositif de traction selon l'une des revendications 4 à 6, caractérisé en ce qu'un boulon de blocage essentiellement cylindrique (26) comporte, dans sa partie axiale, qui se situe dans le cas du boulon de blocage (26) enfiché dans les perçages transversaux (42, 80, 40), à l'intérieur du perçage transversal (80) de la patte (78, 79) de l'élément de traction (24, 28), de l'élément intermédiaire (22) ou de la partie formant cadre (20), un rétrécissement (120), notamment un méplat sur la face supérieure du boulon.

8. Dispositif de traction selon l'une des revendications 2 à 7, caractérisé en ce qu'il est prévu un dispositif de verrouillage (88), qui s'accroche au boulon de blocage (26) et empêche un déplacement intempestif du boulon de blocage (26).

9. Dispositif de traction selon l'une des revendications 1 ou 8, caractérisé en ce que la partie formant cadre (20) contient un élément intermédiaire (22), qui est déplacable au moyen d'un dispositif d'entraînement, de préférence au moyen d'un vérin hydraulique (30) dans la direction longitudinale du véhicule et auquel est fixé l'élément de traction (24, 28).

10. Dispositif de verrouillage pour une liaison par boulon entre un logement (42) et un élément (78) qui est soumis à des forces dirigées transversalement par rapport à l'axe du boulon, comportant un boitier (90), qui peut être fixé au logement (42) et qui loge un boulon de blocage (26), qui est chargé frontalement par un ressort de pression (92) qui le repousse hors du boitier (90), et un levier de transmission (96) réglable au moyen d'un levier pivotant (62) et dont la branche (110) s'engage dans un évidement (112, 114) du boulon de blocage (26), notamment pour un dispositif de traction (14) selon l'une des revendications 1 à 9, caractérisé en ce que l'agencement du ressort de pression (92) permet une charge du boulon de blocage (26) sur l'ensemble sa cours de déplacement, et qu'au levier de transmission (96) s'accroche un ressort de torsion (94), qui prend appui dans le boîtier (90) et qui repousse la branche (110) du levier de transmission (96) de manière qu'il engrène de façon permanente en repoussant le boulon de blocage (26).

11. Dispositif de verrouillage selon la revendication 10, caractérisé en ce que la branche (110) possède une butée (122) qui, lorsque le boulon de blocage (26) est dans sa position ouverte, prend appui sur ce boulon de telle sorte que le bouton de blocage (26) ne peut pas passer automatiquement dans sa position fermée avant d'avoir été déplacé au moins partiellement dans le sens opposé.

12. Dispositif de verrouillage selon la revendication 10 ou 11, caractérisé en ce qu'au levier pivotant (94) est accroché un câble de traction - poussée (115), qui est relié à un levier de commande (108) qui est disposé dans la cabine du véhicule, de telle sorte que le levier de commande (108) affiche de façon nette les différentes positions de fonctionnement du boulon de blocage (26).

13. Dispositif de verrouillage selon l'une des revendications 10 à 12, caractérisé en ce que le levier pivotant (94) est relié à un levier de commande (108), qui est disposé dans la cabine du véhicule et qui est agencé de telle sorte qu'il peut être bloqué de manière à être détachable manuellement, au moins dans sa position qui correspond à la position de blocage du bouton de blocage (26).
